**Europäisches Patentamt**

**European Patent Office**

**Office européen des brevets**

(11) Veröffentlichungsnummer: **0 176 734 B1**

(12) **EUROPÄISCHE PATENTSCHRIFT**

(45) Veröffentlichungstag der Patentschrift: **04.12.91**

(51) Int. Cl.⁵: **G02F 1/133**

(21) Anmeldenummer: **85110403.4**

(22) Anmeldetag: **20.08.85**

(54) **Multiplexbare Flüssigkristallzelle.**

(30) Priorität: **05.10.84 DE 3436527**

(43) Veröffentlichungstag der Anmeldung:
**09.04.86 Patentblatt 86/15**

(45) Bekanntmachung des Hinweises auf die
Patenterteilung:
**04.12.91 Patentblatt 91/49**

(84) Benannte Vertragsstaaten:
**DE FR GB IT NL SE**

(56) Entgegenhaltungen:
**EP-A- 0 102 452**
**DE-A- 3 201 122**
**US-A- 4 413 883**

(73) Patentinhaber: **VDO Adolf Schindling AG**
**Gräfstrasse 103**
**W-6000 Frankfurt/Main 90(DE)**

(72) Erfinder: **Fertig, Werner, Dr.**
**Paul-Wagner-Strasse 66**
**W-6100 Darmstadt(DE)**

(74) Vertreter: **Klein, Thomas, Dipl.-Ing. (FH)**
**Sodener Strasse 9 Postfach 6140**
**W-6231 Schwalbach a. Ts.(DE)**

## Beschreibung

Die Erfindung betrifft eine multiplexbare Flüssigkristallzelle mit zwei im Abstand zueinander angeordneten Substraten, die zwischen sich einen mit Flüssigkristallsubstanz gefüllten Zellenraum bilden, mit zellenraumseitig auf dem einen Substrat angeordneten Streifenelektroden und zellenraumseitig auf dem anderen Substrat angeordneten, den Streifenelektroden gegenüberliegenden Bildelektroden, die über Metall-Isolator-Metall-Elemente mit ebenfalls auf dem Substrat angeordneten Datenleitungen verbunden sind, wobei der Isolator an einer Seitenfläche der Bildelektrode oder der Datenleitung angeordnet und über einen Verbindungskontakt mit der Datenleitung bzw. der Bildelektrode verbunden ist.

Bei einer derartigen Flüssigkristallzelle ist es bekannt, außer an der Seitenfläche der Bildelektrode auch auf deren dem Substrat abgewandten Oberfläche einen Isolator anzuordnen, um zu verhindern, daß der die beiden Isolatoren zumindest teilweise überdeckende Verbindungskontakt in leitende Verbindung mit der Bildelektrode kommt.

Eine solche Flüssigkristallzelle ist sehr aufwendig, da die Herstellung des Metall-Isolator-Metall-Elements mehrere Herstellungsschritte erfordert. Nach dem Aufbringen der Bildelektroden und der Datenleitungen muß zuerst der Isolator an der Seitenfläche und dann der Isolator auf der Oberfläche der Bildelektrode bzw. der Streifenelektrode aufgebracht werden, ehe der Verbindungskontakt hergestellt werden kann.

Aus der DE-A-32 01 122 ist eine Flüssigkristallzelle der eingangs genannten Art bekannt, bei der durch Oxidation der freien Oberfläche des Verbindungskontakts ein Isolator gebildet wird. Diesen Isolator sowohl an seiner Seitenfläche als auch zumindest teilweise an seiner dem Substrat abgewandten Oberfläche überdeckend wird anschließend die Datenleitung und die Bildelektrode aufgebracht. Diese Ausbildung ermöglicht keine eng tolerierbaren Metall-Isolator-Metall-Elemente.

Aufgabe der Erfindung ist daher, eine Flüssigkristallzelle der eingangs genannten Art zu schaffen, die einen einfachen Aufbau aufweist und mit geringem Aufwand eng toleriert herstellbar ist.

Diese Aufgabe wird erfindungsgemäß dadurch gelöst, daß den Randbereich der Bildelektrode oder Datenleitung und den ihm benachbarten Bereich des Substrats bedeckend, und als Verbindungskontakt bis zur Datenleitung bzw. Bildelektrode führend eine Leitschicht angeordnet ist, die aus einem Leitmaterial besteht, das an seiner freien Oberfläche eine isolierende Oxidationsschicht bildend oxidiert ist, wobei die Leitschicht durch Beaufschlagung der Bildelektrode oder der Datenleitung und des Substrats mit Leitmaterialteilchen unter einem eine Abschattung durch die Randkante der Bildelektrode bzw. der Datenleitung bewirkenden spitzen Winkel hergestellt ist und die Dicke der Oxidationsschicht im der Bildelektrode oder der Datenleitung unmittelbar benachbarten abgeschatteten Bereich der ganzen Dicke des aufgebrachten Leitmaterials entspricht.

Durch diese Ausbildung kann nicht nur auf einen zweiten Isolator, sondern auch auf einen separaten Vorgang zum Aufbringen des ersten, an der Seitenfläche der Bildelektrode bzw. des Verbindungskontakts angeordneten Isolators verzichtet werden.

Bei der Beaufschlagung der Bildelektrode oder Daten-Leitung und des Substrats mit den Leitmaterialteilchen unter dem spitzen Winkel entsteht ein Schattenbereich in dem unmittelbar der Bildelektrode oder der Daten-Leitung benachbarten Bereich, wodurch in diesem Bereich die Dicke der Leitschicht geringer ist als auf der Bildelektrode oder der Datenleitung und in dem Bereich außerhalb des Schattenbereichs. Die Größe des Schattenbereichs ist bestimmt durch die Dicke der Bildelektrode oder der Datenleitung, die Steilheit der Seitenfläche der Bildelektrode oder der Datenleitung zur Ebene des Substrats sowie den Winkel, unter dem die Leitmaterialteilchen die Bildelektrode oder der Datenleitung und das Substrat beaufschlagen. Je spitzer dieser Winkel ist, umso größer ist der Schattenbereich.

Da in dem Schattenbereich die Dicke der Leitschicht gering ist, wird sie bei dem Oxidationsprozess in diesem Bereich zumindest weitgehend oxidiert und bildet dadurch den an der Seitenfläche der Bildelektrode oder der Datenleitung anliegenden Isolator. Durch die Prozesszeit der Oxidation kann auf einfache Weise die Größe des Isolators bestimmt werden.

Die Anordnung der Bildelektrode, des Isolators und der zum Verbindungskontakt führenden Leitschicht in einer Ebene, so daß diese Schichten mit ihren Seitenflächen aneinanderliegen, hat den Vorteil, daß die dadurch gebildeten Metall-Isolator-Metall-Elemente bei geringer Größe eng toleriert herstellbar sind, wodurch es möglich ist, auch die Bildelektroden mit geringer Größe auszubilden. Dies wiederum ermöglicht eine relativ große Anzahl Bildelektroden pro Flächeneinheit und damit einen hohen Auflösungsgrad der durch die Bildelektroden darzustellenden Zeichen.

Die Leitmaterialteilchen können durch Sputtern oder auch durch Aufdampfen aufgebracht sein.

Ist bei an die Bildelektrode angrenzendem Metall-Isolator-Metall-Element die auf das Substrat aufgebrachte Leitschicht die Datenleitung zumindest teilweise überdeckend, so kann auf einen besonderen Verbindungskontakt verzichtet werden.

Ein Ausführungsbeispiel der Erfindung ist in der Zeichnung dargestellt und wird im folgenden näher beschrieben.

Es zeigen

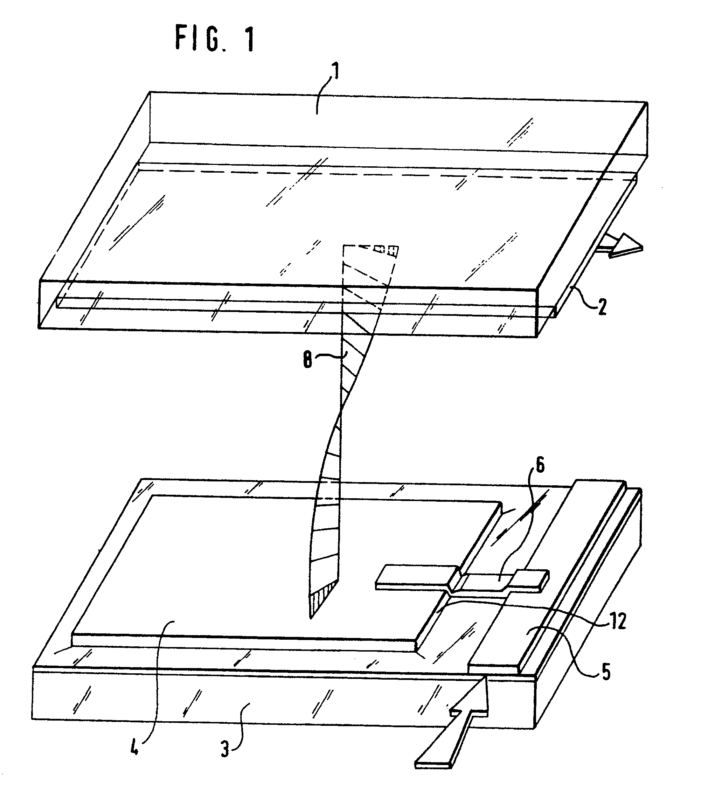

Figur 1 eine perspektivische Explosionsansicht einer erfindungsgemäßen Flüssigkristallzelle

Figur 2 eine ausschnittsweise Draufsicht eines mit Bildelektroden versehenen Substrats

Figur 3 ein ausschnittsweiser Querschnitt eines Substrats im Bereich eines Metall-Isolator-Metall-Elements vor dem Oxidationsprozess

Figur 4 das Substrat nach Figur 3 nach dem Oxidationsprozess

Die in den Figuren dargestellte Flüssigkristallzelle besteht aus einem oberen Substrat 1 aus Glas, das eine ansteuerbare Streifenelektrode 2 trägt. Das untere, ebenfalls aus Glas bestehende Substrat 3 trägt eine Bildelektrode 4. Weiterhin ist auf dem Substrat 3 eine Datenleitung 5 angeordnet. Zwischen den Substraten 1 und 3 ist die nicht dargestellte Flüssigkristallsubstanz angeordnet, die durch eine Helix 8 symbolisiert ist.

Die Bildelektrode 4 sowie die Datenleitung 5 bestehen aus transparentem Indiumzinnoxid.

Eine zwischen der Bildelektrode 4 und der Datenleitung 5 diese überlappend angeordnete Leitschicht 6 besteht aus Tantal, wobei die freie Oberfläche der Leitschicht 6 zu einer Isolatorschicht 9 aus Tantalpentoxid oxidiert ist.

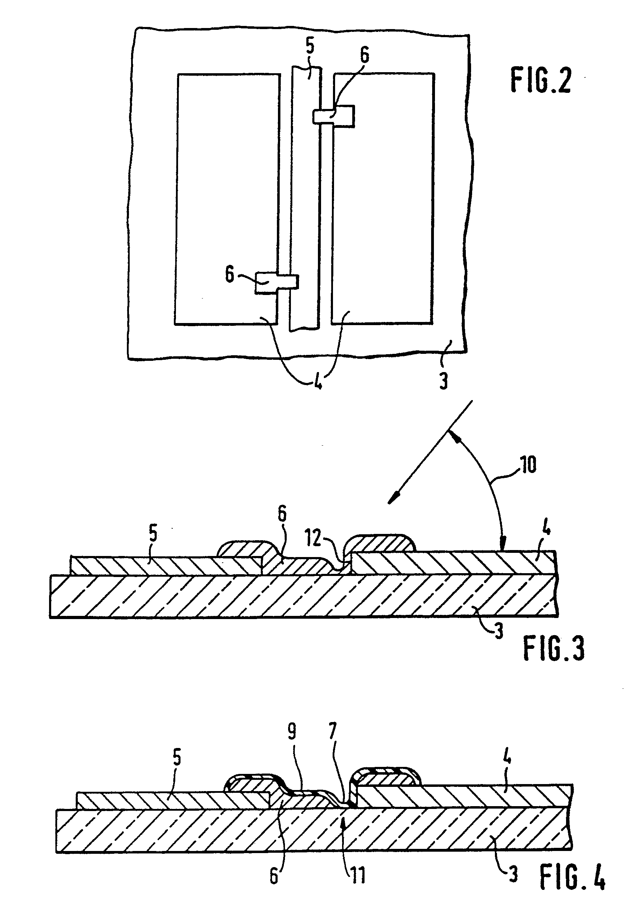

Wie in Figur 3 dargestellt, wird die Leitschicht 6 dadurch hergestellt, daß Leitmaterial z.B. durch Dampfen unter einem Winkel 10 auf den Randbereich der Bildelektrode 4 und den ihm benachbarten Bereich des Substrats 3 aufgebracht wird. Durch das Aufbringen unter dem Winkel 10 ergibt sich im der Bildelektrode 4 unmittelbar benachbarten Bereich wegen der Randkante der Bildelektrode 4 ein Schattenbereich 11, in dem die Leitschicht 6 eine wesentlich geringere Dicke besitzt, als in den anderen Bereichen. Nach dem Aufbringen des Leitmaterials wird die freie Oberfläche der Leitschicht 6 in einem Oxidationsprozess derart oxidiert, daß die Dicke der dabei entstehenden Isolatorschicht 9 der Dicke des im Schattenbereich 11 aufgebrachten Leitmaterials entspricht. In diesem Schattenbereich 11 wird durch die Isolatorschicht 9 der Isolator 7 des Metall-Isolator-Metall-Elements gebildet.

Wie in Figur 2 zu sehen ist, ist die Breite der Leitschicht 6 erheblich geringer als die Breite der Bildelektrode 4. Es ist daher gleich, an welcher Stelle die Leitschicht 6 zwischen der Datenleitung 5 und der Bildelektrode 4 angeordnet ist, wenn nur die kleinere Querschnittsfläche der Leitschicht 6 vollständig der Seitenfläche 12 der Bildelektrode 4 gegenüberliegt.

Weiterhin ist in Figur 2 zu sehen, daß bei der einen Leitschicht das Metall-Isolator-Metall-Element unmittelbar der entsprechenden Bildelektrode und bei der anderen Leitschicht unmittelbar der Datenleitung benachbart angeordnet ist. Dies ergibt sich daraus, daß bei gemeinsamen Aufbringen des Leitmaterials einmal im Randbereich der Bildelektrode und zum anderen im Randbereich der Datenleitung ein Schattenbereich vorhanden ist.

In dem beschriebenen Ausführungsbeispiel wird das Leitmaterial durch Aufdampfen aufgebracht. Es versteht sich, daß zum Aufbringen des Leitmaterials jede Abscheidemethode mit Vorzugsrichtung vorteilhaft anwendbar ist.

**Patentansprüche**

1. Multiplexbare Flüssigkristallzelle mit zwei im Abstand zueinander angeordneten Substraten, die zwischen sich einen mit Flüssigkristallsubstanz gefüllten Zellenraum bilden, mit zellenraumseitig auf dem einen Substrat angeordneten Streifenelektroden und zellenraumseitig auf dem anderen Substrat angeordneten, den Streifenelektroden gegenüberliegenden Bildelektroden, die über Metall-Isolator-Metall-Elemente mit ebenfalls auf dem Substrat angeordneten Datenleitungen verbunden sind, wobei der Isolator, an einer Seitenfläche der Bildelektrode oder der Datenleitung angeordnet und über einen Verbindungskontakt mit der Datenleitung bzw. der Bildelektrode verbunden ist, dadurch gekennzeichnet, daß den Randbereich der Bildelektrode (4) oder Datenleitung (5) und den ihm benachbarten Bereich des Substrats (3) bedeckend und als Verbindungskontakt bis zur Datenleitung bzw. Bildelektrode führend eine Leitschicht angeordnet ist, die aus einem Leitmaterial besteht, das an seiner freien Oberfläche eine isolierende Oxidationsschicht bildend oxidiert ist, wobei die Leitschicht (6) durch Beaufschlagung der Bildelektrode (4) oder der Datenleitung und des Substrats (3) mit Leitmaterialteilchen unter einem eine Abschattung durch die Randkante der Bildelektrode (4) bzw. der Datenleitung bewirkenden spitzen Winkel (10) hergestellt ist und die Dicke der Oxidationsschicht im der Bildelektrode (4) oder der Datenleitung unmittelbar benachbarten abgeschatteten Bereich (11) der ganzen Dicke des aufgebrachten Leitmaterials entspricht.

2. Flüssigkristallzelle nach Anspruch dadurch gekennzeichnet, daß die Leitmaterialteilchen durch Sputtern aufgebracht sind.

3. Flüssigkristallzelle nach Anspruch 1 dadurch gekennzeichnet, daß die Leitmaterialteilchen durch Aufdampfen aufgebracht sind.

4. Flüssigkristallzelle nach einem der Ansprüche 1 bis 3 dadurch gekennzeichnet, daß bei an die Bildelektrode (4) angrenzendem Metall-Isolator-Metall-Element die auf das Substrat (3) aufgebrachte Leitschicht (6) die Datenleitung (5) zumindest teilweise überdeckt.

## Claims

1. Multiplexible liquid-crystal cell with two substrates arranged at a distance from each other which form between them a cell space filled with liquid-crystal substance, having strip electrodes disposed on the cell-space side on one substrate and image electrodes disposed on the cell-space side on the other substrate situated opposite the strip electrodes, which image electrodes are connected via metal-insulator-metal elements to data lines also disposed on the substrate, the insulator being disposed at one side face of the image electrode or the data line and being connected via a connecting contact to the data line or the image electrode, characterized in that, covering the peripheral region of the image electrode (4) or data line (5) and the region of the substrata (3) adjacent to it and leading as connecting contact to the data line or image electrode, there is disposed a conducting layer which is composed of a conducting material which is oxidized at its free surface to form an insulating oxidation layer, the conducting layer (6) being produced by bombardment of the image electrode (4) or the data line and of the substrate (3) with conducting material particles at an acute angle (10) producing a shading by the peripheral edge of the image electrode (4) or the data line and the thickness of the oxidation layer in the shaded region (11) immediately adjacent to the image electrode (4) or the data line corresponding to the entire thickness of the deposited conducting material.

2. Liquid-crystal cell according to Claim 1, characterized in that the conducting material particles are deposited by sputtering.

3. Liquid-crystal cell according to Claim 1, characterized in that the conducting material particles are deposited by vapour deposition.

4. Liquid-crystal cell according to one of the Claims 1 to 3, characterized in that, with a metal-insulator-metal element adjacent to the image electrode (4), the conducting layer (6) deposited on the substrate (3) at least partially covers the data line (5).

## Revendications

1. Cellule à cristaux liquides, multiplexable, comportant deux substrats disposés à une certaine distance l'un de l'autre et qui forment entre eux un espace de cellule empli d'une substance à propriété de cristaux liquides, avec des électrodes en forme de barres disposées du côté de l'espace de cellule sur un substrat et, disposées du côté de l'espace de cellule sur l'autre substrat, en face des électrodes en forme de barres, des électrodes de formation d'image, qui sont reliées, par l'intermédiaire d'éléments métal-isolant-métal avec des conducteurs d'acheminement de données, également disposés sur le substrat, l'isolant étant placé sur une surface latérale de l'électrode de formation d'image ou du conducteur d'acheminement de données et étant relié,par l'intermédiaire d'un contact de liaison, avec le conducteur d'acheminement de données ou avec l'électrode de formation d'image, cellule caractérisée en ce qu'en recouvrant la zone périphérique de l'électrode (4) de formation d'image ou du conducteur (5) d'acheminement de données et la zone voisine du substrat (3) et en menant, à titre de contact de liaison, jusqu'au conducteur d'acheminement de données ou jusqu'à l'électrode de formation d'image, est disposée une couche conductrice consistant en une matière conductrice, qui est oxydée à sa surface libre en formant une couche d'oxydation isolante, la couche isolante (6) étant produite par revêtement de l'électrode (4) formatrice d'image ou du conducteur d'acheminement de données et du substrat (3) par des particules d'une matière conductrice, sous un angle aigu (10) constituant une zone d'ombre portée pour la zone périphérique de l'électrode (4) de formation d'image ou le conducteur d'acheminement de données, et en ce que l'épaisseur de la couche d'oxydation correspond, dans la zone (11) d'ombre portée immédiatement voisine de l'électrode (4) de formation d'image ou du conducteur d'acheminement de données, à la totalité de l'épaisseur de la matière conductrice appliquée.

2. Cellule à cristaux liquides selon la revendication 1, caractérisée en ce que les particules de la matière conductrice ont été appliquées par pulvérisation électrique.

3. Cellule à cristaux liquides selon la revendication 1, caractérisée en ce que les particules de la matière conductrice ont été appliquées par un processus d'évaporation.

4. Cellule à cristaux liquides selon l'une des revendications 1 à 3, caractérisée en ce que, sur l'élément métal-isolant-métal adjacent à l'électrode (4) de formation d'image, la couche conductrice (6) appliquée sur le substrat (3), recouvre au moins partiellement le conducteur (5) d'acheminement de données.

# FIG. 1

FIG.2

FIG.3

FIG.4